# EUROPEAN PATENT APPLICATION

(11) **EP 3 142 022 A1**
(43) Date of publication of application: **15.03.2017**
(21) Application number: 15881729.6
(22) Date of filing: 15.07.2015
(51) Int. Cl.: G06F 17/30

(54) **SEARCH RECOMMENDATION METHOD AND DEVICE**

(30) Priority: 13.02.2015 CN 201510079816
(71) Applicant: Baidu Online Network Technology (Beijing) Co., Ltd, Beijing 100085 (CN)
(72) Inventor: HUANG, Jizhou, Beijing 100085 (CN); WANG, Haifeng, Beijing 100085 (CN); LI, Ying, Beijing 100085 (CN); WAN, Lu, Beijing 100085 (CN)
(74) Representative: Romano, Giuseppe
(86) International application number: PCT/CN2015/084036
(87) International publication number: WO 2016/127568

(57) **Abstract**

A search recommendation method and device. The search recommendation method comprises: receiving a search term and acquiring recommended contents according to the search term (S11); generating a title of the recommended contents according to the search term and the recommended contents, wherein the title contains information associated with the search term and information associated with the recommended contents (S12); and displaying the recommended contents and the title of the recommended contents (S13).The method can better satisfy a user's needs.

## Description

### CROSS REFERENCE TO RELATED APPLICATION

This application claims priority to and benefits of Chinese Patent Application Serial No. 201510079816.2, titled with "method and device for recommending according to search result" and filed with the State Intellectual Property Office of P. R. China on February 13, 2015 by Baidu Online Network Technology (Beijing) Co., Ltd., the entire content of which is incorporated herein by reference.

### TECHNICAL FIELD

The present disclosure generally relates to the field of Internet technology, and more particularly, to a method and a device for recommending according to a search result.

### BACKGROUND

Recommended contents can be displayed on a right side when a user is performing a search. In the related art, a title of the recommended contents displayed on the right side is a title of a fixed form or a fixed title. For example, the title of the fixed form includes: "related animals", "related plants", "related persons" or the like; and the fixed title is, for example, "others search for".

Generally, the user has a requirement of knowing why the recommended contents are recommended. However, his requirement of the user cannot be satisfied in the related art.

### SUMMARY

Embodiments of the present disclosure seek to solve at least one of the problems existing in the related art to at least some extent.

Accordingly, an objective of the present disclosure is to provide a method for recommending according to a search result. The method may satisfy a user's requirement better.

Another objective of the present disclosure is to provide a device for recommending according to a search result.

In order to achieve the above objectives, the method for recommending according to a search result provided in embodiments of a first aspect of the present disclosure includes: receiving a query and acquiring recommended contents according to the query; creating a title of the recommended contents according to the query and the recommended contents, in which the title of the recommended contents includes information associated with the query and information associated with the recommended contents; and displaying the recommended contents and the title of the recommended contents.

With the method provided in embodiments of the first aspect of the present disclosure, by creating the title of the recommended contents according to the query and the recommended contents, the title of the recommended contents may be created dynamically, thereby avoiding a title of a fixed form. Moreover, by including the information associated with the query to the title of the recommended contents, the user may know a reason for recommending the recommended contents, thereby satisfying the user's requirement, and ensuring that the user can understand a relationship between the recommended contents and the query input by the user better, or understand a relationship between the recommended contents and a search intention of the user better.

In order to achieve the above objectives, the device for recommending according to a search result provided in embodiments of a second aspect of the present disclosure includes: an acquiring module, configured to receive a query and to acquire recommended contents according to the query; a creating module, configured to create a title of the recommended contents according to the query and the recommended contents, in which the title of the recommended contents includes information associated with the query and information associated with the recommended contents; and a displaying module, configured to display the recommended contents and the title of the recommended contents.

With the device provided in embodiments of the second aspect of the present disclosure, by creating the title of the recommended contents according to the query and the recommended contents, the title of the recommended contents may be created dynamically, thereby avoiding a title of a fixed form. Moreover, by including the information associated with the query to the title of the recommended contents, the user may know a reason for recommending the recommended contents, thereby satisfying the user's requirement, and ensuring that the user can understand a relationship between the recommended contents and the query input by the user better, or understand a relationship between the recommended contents and a search intention of the user better.

Embodiments of the present disclosure further provide an electronic device. The electronic device includes: one or more processors; a memory; and one or more programs, stored in the memory and configured to perform following operations when executed by the one or more processors: receiving a query and acquiring recommended contents according to the query; creating a title of the recommended contents according to the query and the recommended contents, in which the title of the recommended contents includes information associated with the query and information associated with the recommended contents; and displaying the recommended contents and the title of the recommended contents.

Embodiments of the present disclosure further provide a non-transitory computer storage medium. The non-transitory computer storage medium has one or more modules stored therein and configured to perform following operations when executed: receiving a query and acquiring recommended contents according to the query; creating a title of the recommended contents according to the query and the recommended contents, in which the title of the recommended contents includes information associated with the query and information associated with the recommended contents; and displaying the recommended contents and the title of the recommended contents.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

The above and/or additional aspects and advantages of embodiments of the present disclosure will become apparent and more readily appreciated from the following descriptions made with reference to the drawings, in which:
Fig. 1 is a flow chart showing a method for recommending according to a search result provided in an embodiment of the present disclosure;
Fig. 2 is a flow chart showing a method for creating a title of recommended contents in embodiments of the present disclosure;
Fig. 3a is a schematic diagram illustrating a title of recommended contents corresponding to a kind of queries in the related art;
Fig. 3b is a schematic diagram illustrating a title of recommended contents created in embodiments of the present disclosure corresponding to a kind of queries;
Fig. 4a is a schematic diagram illustrating a title of recommended contents corresponding to another kind of queries in the related art;
Fig. 4b is a schematic diagram illustrating a title of recommended contents created in embodiments of the present disclosure corresponding to another kind of queries;
Fig. 5a is a schematic diagram illustrating a title of recommended contents corresponding to another kind of queries in the related art;
Fig. 5b is a schematic diagram illustrating a title of recommended contents created in embodiments of the present disclosure corresponding to another kind of queries;
Fig. 6 is a flow chart showing another method for creating a title of recommended contents in embodiments of the present disclosure;
Fig. 7 is a flow chart showing another method for creating a title of recommended contents in embodiments of the present disclosure;
Fig. 8 is a block diagram showing a device for recommending according to a search result provided in another embodiment of the present disclosure;
Fig. 9 is a block diagram showing a device for recommending according to a search result provided in another embodiment of the present disclosure;
Fig. 10 is a block diagram showing a device for recommending according to a search result provided in another embodiment of the present disclosure.

### DETAILED DESCRIPTION

Embodiments of the present disclosure will be described in detail and examples of embodiments are shown in the drawings. The same or similar elements and the elements having same or similar functions are denoted by like reference numerals throughout the descriptions. Embodiments described herein with reference to drawings are explanatory, serve to explain the present disclosure, and are not construed to limit embodiments of the present disclosure. Instead, the embodiments of the present disclosure comprise all the variants, modifications and their equivalents within the spirit and scope of the present disclosure as defined by the claims.

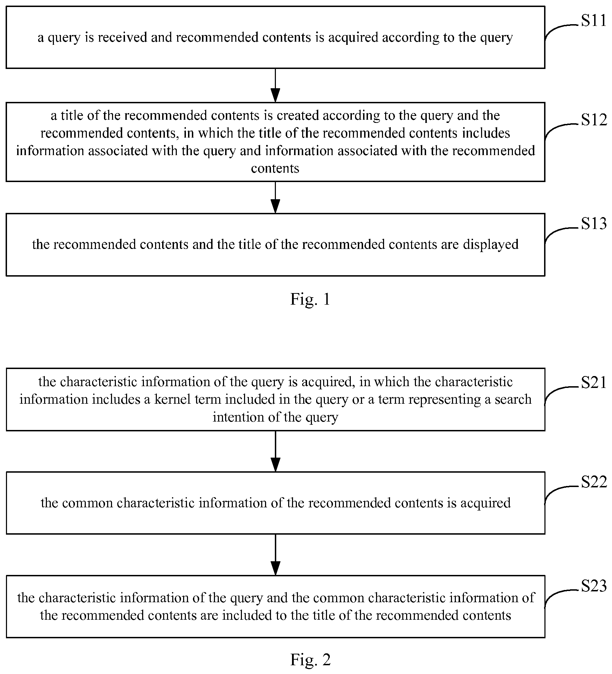

Fig. 1 is a flow chart showing a method for recommending according to a search result provided in an embodiment of the present disclosure. The method includes followings.

At S 11, a query is received and recommended contents are acquired according to the query.

A search engine may receive the query input by a user in a search bar. Also, the query may be called as a search term or a retrieval term.

The search engine may acquire corresponding search results and corresponding recommended contents according to the query after receiving the query.

For example, acquiring the recommended contents includes grading contents in a database according to a preset algorithm, and acquiring the recommended contents from the large amount of data according to the grading result.

At S12, a title of the recommended contents is created according to the query and the recommended contents, in which the title of the recommended contents includes information associated with the query and information associated with the recommended contents.

Different from the related art, in the embodiment, the title of the recommended contents is created according to the query and the recommended contents. Since the query and/or the recommended contents may change, the title of the recommended contents is also variable. Thus, the title of the recommended contents may be created dynamically. Even the recommended contents keeps unchanged, a different title of the recommended contents may be created if there is a different query.

Alternatively, the information associated with the query is characteristic information of the query, and the information associated with the recommended contents is common characteristic information of the recommended contents. Referring to Fig. 2, creating the title of the recommended contents according to the query and the recommended contents includes followings.

At S21, the characteristic information of the query is acquired, in which the characteristic information includes a kernel term included in the query or a term representing a search intention of the query.

At S22, the common characteristic information of the recommended contents is acquired.

At S23, the characteristic information of the query and the common characteristic information of the recommended contents are included to the title of the recommended contents.

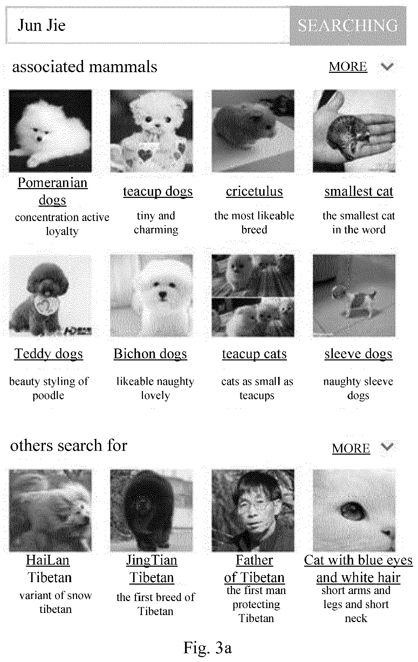

For example, if the query is "Jun Jie", referring to Fig. 3a, which is a schematic diagram showing displaying the recommended contents in the related art, the title of the recommended contents is just a title of a fixed form, such as "related mammals" or "others search for".

However, in the embodiment, the title of the recommended contents is created dynamically according to the query and the recommended contents.

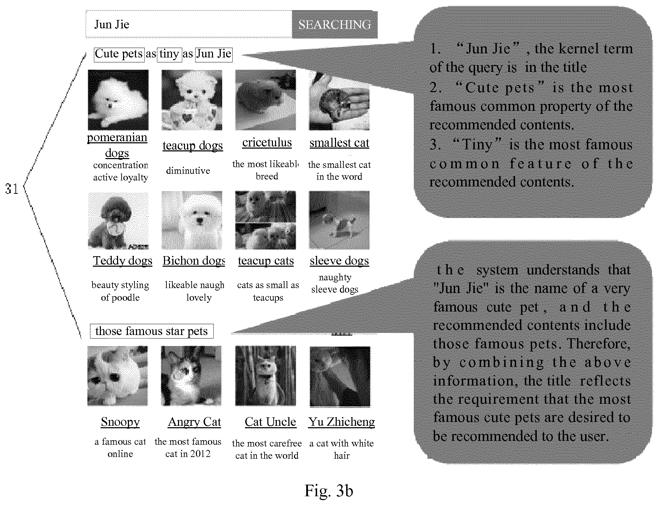

For example, referring to Fig. 3b, the title of the recommended contents 31 may specifically include: "cute pets as tiny as Jun Jie" and "famous star pets".

The title "cute pets as tiny as Jun Jie" includes the query "Jun Jie" and common characteristic information "cute pets" and "tiny" of the recommended contents.

Furthermore, the system understands that "Jun Jie" is the name of a very famous cute pet online, which reflects the user's search intention of searching for famous cute pets online. Therefore, the title "famous star pets" may include the search intention "famous" and the common characteristic information "pets".

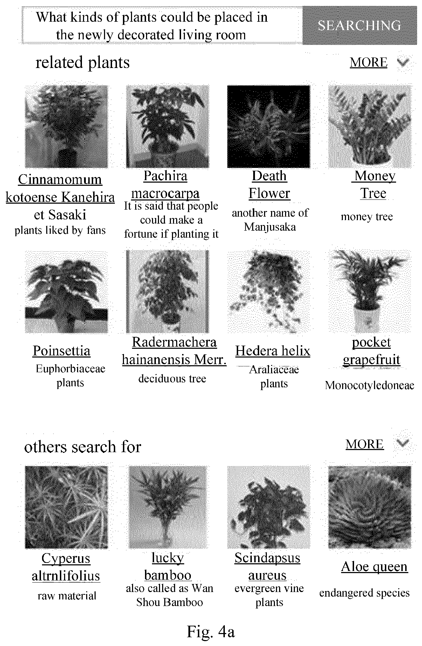

As another example, if the query is "What kinds of plants could be placed in the newly decorated living room", referring to Fig. 4a, which is a schematic diagram showing displaying the recommended contents in the related, the title of the recommended contents is just the title of the fixed form, such as "related plants" or "others search for".

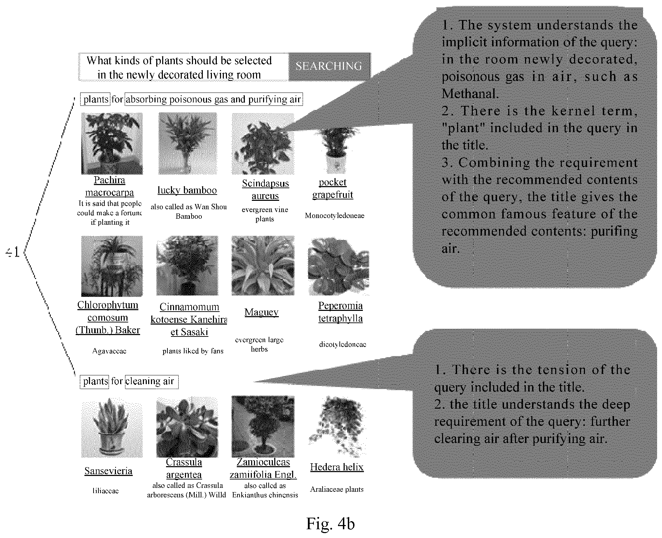

However, in the embodiment, referring Fig. 4b, the title of the recommended contents 41 is created dynamically according to the query and the recommended contents.

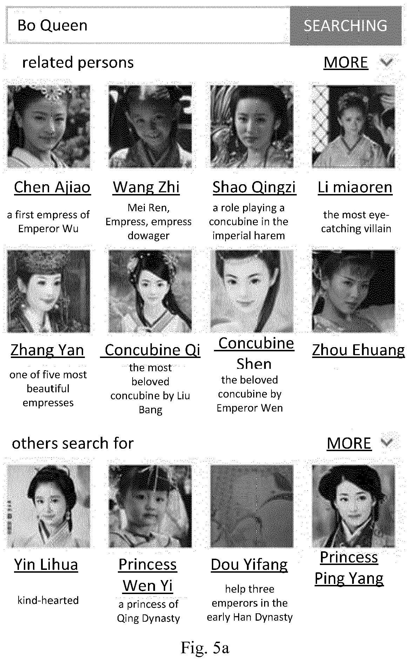

As another example, if the query is "Bo Queen", referring to Fig. 5a, which is a schematic diagram showing displaying the recommended contents in the related art, the title of the recommended contents is just the title of the fixed form, such as "related persons" or "others search for".

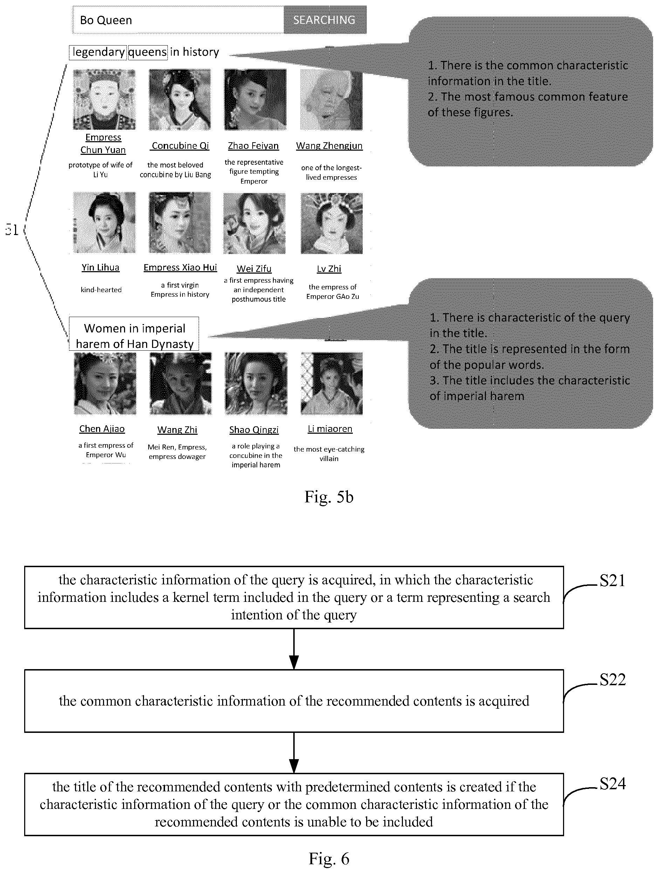

However, in the embodiment, referring to Fig. 5b, the title of the recommended contents 51 is created dynamically according to the query and the recommended contents.

Alternatively, when the above searches are performed, including the characteristic information of the query and the common characteristic information of the recommended contents to the title of the recommended contents includes:
including the characteristic information of the query and the common characteristic information of the recommended contents to the title of the recommended contents in a form of a network popular word.

For example, referring to Fig. 5b, the title of the recommended contents includes "women in the imperial harem of Han Dynasty" that is represented in the form of the network popular word.

Alternatively, referring to Fig. 6, the method includes followings for creating the title of the recommended contents.

At S24, the title of the recommended contents with predetermined contents is created if the characteristic information of the query or the common characteristic information of the recommended contents is unable to be included to the title.

For example, taking Fig. 3b as an example, titles (such as "better recommends") may be created if the title shown in Fig. 3b is unable to be acquired.

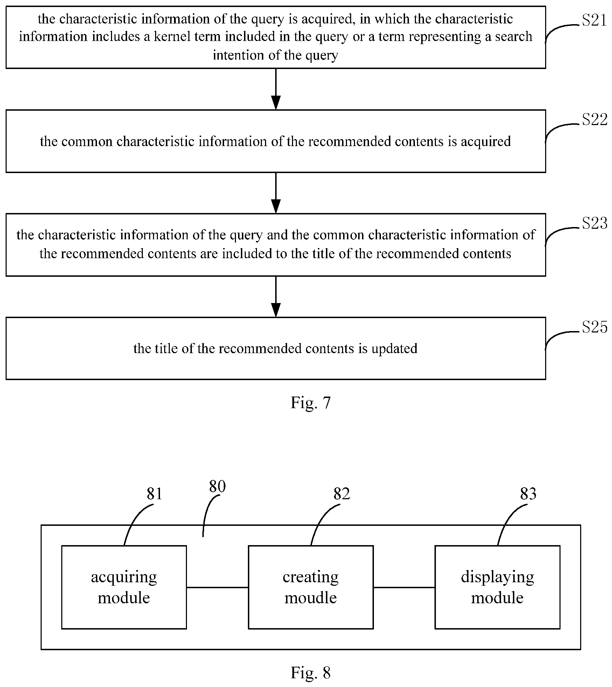

Alternatively, referring to Fig. 7, the method further includes followings after creating the title of the recommended contents.

At S25, the title of the recommended contents is updated.

For example, the title of the recommended contents is updated at a preset frequency. Or, a trigger event is set in advance, and the title of the recommended contents is updated if the trigger event occurs.

At S 13, the recommended contents and the title of the recommended contents are displayed.

The recommended contents and the title of the recommended contents are displayed correspondingly after the title of the recommended contents is created.

Alternatively, displaying the recommended contents and the title of the recommended contents includes:
sequencing the recommended contents according to the title of the recommended contents; and
displaying the recommended contents sequenced corresponding to the title of the recommended contents.

For example, as limited by displaying space, there are a few number of recommended contents displayed every time. For example, corresponding to one title, 4 recommended contents are generally displayed every time. Therefore, the recommended contents top ranked are displayed in priority according to an acquired result of sequencing the recommended contents.

In the embodiment, the recommended contents may be sequenced in combination with the title. The recommended contents largely associated with the title are at the head of the sequenced recommended contents, thereby achieving optimizing the recommended contents and achieving sequencing cards in a global optimum way if the recommended contents are displayed in a form of the cards.

Specifically, for example, the recommended contents of associated persons are acquired if a searching for a person is performed. After the recommended contents are acquired, the recommended contents having common characteristic information are selected therefrom, and the title is created according to the common characteristic information. Then, the recommended contents with the common characteristic information may be displayed in priority, corresponding to the title.

For example, referring to Fig. 5b, if the title is "legendary queens in history", the corresponding recommended contents are queens, which are optimized contents of the persons shown in Fig. 5a.

In the embodiment, by creating the title of the recommended contents according to the query and the recommended contents, it may realize creating the recommended contents dynamically, thereby avoiding the title of the fixed form. Moreover, by including the information associated with the query to the title of the recommended contents, the user may know a reason for recommending the recommended contents, thereby satisfying the user's requirement, and ensuring that the user can understand a relationship between the recommended contents and the query input by the user better, or understand a relationship between the recommended contents and a search intention of the user better. Furthermore, by optimizing the recommended contents according to the title, more suitable contents may be recommended; by analyzing the query and the recommended contents to create the title, an error of classifying may be avoided, for example, classifying animals as plants may be avoided, thereby improving the user experience; by updating the title, a baldness may be reduced, thereby avoiding perception fatigue and improving interest of the user; and by classifying the recommended contents to the corresponding title, disorganized contents may be avoided compared with coverall contents included in the title "others search for".

Fig. 8 is a block diagram showing a device for recommending according to a search result provided in another embodiment of the present disclosure. The device 80 includes an acquiring module 81, a creating module 82 and a displaying module 83.

The acquiring module 81 is configured to receive a query and acquire recommended contents according to the query.

A search engine may receive the query input by a user in a search bar. Also, the query may be called as a search term or a retrieval term.

The search engine may acquire corresponding search results and corresponding recommended contents according to the query after receiving the query.

For example, acquiring the recommended contents includes grading contents in a database according to a preset algorithm, and acquiring the recommended contents from a great amount of data according to the grading result.

The creating module 82 is configured to create a title of the recommended contents according to the query and the recommended contents, in which the title of the recommended contents includes information associated with the query and information associated with the recommended contents.

Different from the related art, in the embodiment, the title of the recommended contents is created according to the query and the recommended contents. Since the query and/or the recommended contents may change, the title of the recommended contents is also variable. Thus, the title of the recommended contents may be created dynamically. Even the recommended contents keeps unchanged, a different title of the recommended contents may be created if there is a different query.

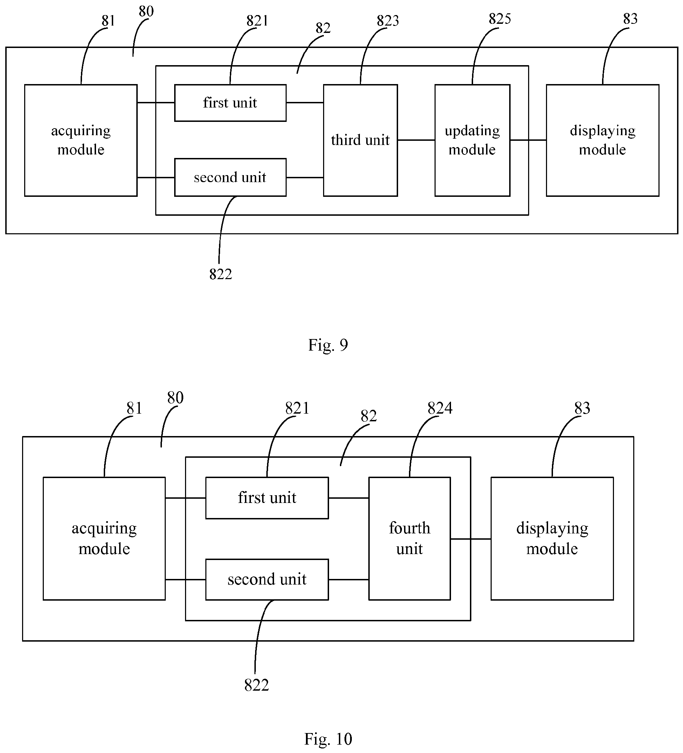

Alternatively, referring to Fig. 9, the information associated with the query is characteristic information of the query, and the information associated with the recommended contents is common characteristic information of the recommended contents. The creating module 82 includes a first unit 821, a second unit 822 and a third unit 823.

The first unit 821 is configured to acquire the characteristic information of the query, in which the characteristic information includes a kernel term comprised in the query or a term representing a search intention of the query.

The second unit 822 is configured to acquire the common characteristic information of the recommended contents.

The third unit 823 is configured to include the characteristic information of the query and the common characteristic information of the recommended contents to the title of the recommended contents.

For example, if the query is "Jun Jie", referring to Fig. 3a, which is a schematic diagram showing displaying the recommended contents in the related art, the title of the recommended contents is just a title of a fixed form, such as "related mammals" or "others search for".

However, in the embodiment, the title of the recommended contents is created dynamically according to the query and the recommended contents.

For example, referring to Fig. 3b, the title of the recommended contents 31 may specifically include: "cute pets as tiny as Jun Jie" and "famous star pets".

The title "cute pets as tiny as Jun Jie" includes the query "Jun Jie" and common characteristic information "cute pets" and "tiny" of the recommended contents.

Furthermore, the system understands that "Jun Jie" is the name of a very famous cute pet online, which reflects the user's search intention of searching for famous cute pets online. Therefore, the title "those famous star pets" may include the search intention "famous" and the common characteristic information "pets".

As another example, if the query is "What kinds of plants should be selected in the newly decorated living room", referring to Fig. 4a, which is a schematic diagram showing displaying the recommended contents in the related art, the title of the recommended contents is just the title of the fixed form, such as "related plants" or "others search for".

However, in the embodiment, referring Fig. 4b, the title of the recommended contents 41 is created dynamically according to the query and the recommended contents.

As another example, if the query is "Bo Queen", referring to Fig. 5a, which is a schematic diagram showing displaying the recommended contents in the related art, the title of the recommended contents is just the title of the fixed form, such as "related persons" or "others search for".

However, in the embodiment, referring to Fig. 5b, the title of the recommended contents 51 is created dynamically according to the query and the recommended contents.

Alternatively, the third unit 823 is specifically configured to:
include the characteristic information of the query and the common characteristic information of the recommended contents to the title of the recommended contents in a form of a network popular word.

For example, referring to Fig. 5b, the title of the recommended contents includes "women in imperial harem of Han Dynasty" that is represented in the form of the network popular word.

Alternatively, referring to Fig. 10, the creating module 82 further includes a fourth unit 824.

The fourth unit 824 is configured to create the title of the recommended contents with predetermined contents if the characteristic information of the query or the common characteristic information of the recommended contents is unable to be included to the title.

For example, taking Fig. 3b as an example, titles (such as "better recommends") may be created if the title shown in Fig. 3b is unable to be acquired.

Alternatively, referring to Fig. 9, the creating module 82 further includes an updating module 825.

The updating module 825 is configured to update the title of the recommended contents.

For example, the title of the recommended contents is updated at a preset frequency. Or, a trigger event is set in advance, and the title of the recommended contents is updated if the trigger event occurs.

The displaying module 83 is configured to display the recommended contents and the title of the recommended contents.

The recommended contents and the title of the recommended contents are displayed correspondingly after the title of the recommended contents is created.

Alternatively, the displaying module 83 is specifically configured to:
sequence the recommended contents according to the title of the recommended contents; and
display the recommended contents sequenced corresponding to the title of the recommended contents.

For example, as limited by displaying space, there are a few number of recommended contents displayed every time. For example, corresponding to one title, 4 recommended contents are generally displayed every time. Therefore, the recommended contents top ranked are displayed in priority according to an acquired result of sequencing the recommended contents.

In the embodiment, the recommended contents may be sequenced in combination with the title. The recommended contents largely associated with the title are at the head of the sequenced recommended contents, thereby achieving optimizing the recommended contents and achieving sequencing cards in a global optimum way if the recommended contents are displayed in a form of the cards.

Specifically, for example, the recommended contents of associated persons are acquired if a searching for a person is performed. After the recommended contents are acquired, the recommended contents having common characteristic information are selected therefrom, and the title is created according to the common characteristic information. Then, the recommended contents with the common characteristic information may be displayed in priority, corresponding to the title.

For example, referring to Fig. 5b, if the title is "legendary queens in history", the corresponding recommended contents are queens, which are optimized contents of the persons shown in Fig. 5a.

In the embodiment, by creating the title of the recommended contents according to the query and the recommended contents, it may realize creating the recommended contents dynamically, thereby avoiding the title of the fixed form. Moreover, by including the information associated with the query to the title of the recommended contents, the user may know a reason for recommending the recommended contents, thereby satisfying the user's requirement, and ensuring that the user understand a relationship between the recommended contents and the query input by the user better, or understand a relationship between the recommended contents and a search intention of the user better. Furthermore, by optimizing the recommended contents according to the title, more suitable contents may be recommended; by analyzing the query and the recommended contents to create the title, an error of classifying may be avoided, for example, classifying animals as plants may be avoided, thereby improving the user experience; by updating the title, a baldness may be reduced, thereby avoiding perception fatigue and improving interest of the user; and by classifying the recommended contents to the corresponding title, disorganized contents may be avoided compared with coverall contents included in the title "others search for".

Embodiments of the present disclosure further provide an electronic device. The electronic device includes: one or more processors; a memory; and one or more programs, stored in the memory and configured to perform following operations when executed by the one or more processors: receiving a query and acquiring recommended contents according to the query; creating a title of the recommended contents according to the query and the recommended contents, in which the title of the recommended contents includes information associated with the query and information associated with the recommended contents; and displaying the recommended contents and the title of the recommended contents.

Embodiments of the present disclosure further provide a non-transitory computer storage medium. The non-transitory computer storage medium has one or more modules stored therein and configured to perform following operations when executed: receiving a query and acquiring recommended contents according to the query; creating a title of the recommended contents according to the query and the recommended contents, in which the title of the recommended contents includes information associated with the query and information associated with the recommended contents; and displaying the recommended contents and the title of the recommended contents.

It is to be illustrated that, terms such as "first" and "second" are used herein for purposes of description and are not intended to indicate or imply relative importance or significance. In addition, in the description of the present disclosure, "a plurality of" means two or more than two, unless specified otherwise.

Any procedure or method described in the flow charts or described in any other way herein may be understood to comprise one or more modules, portions or parts for storing executable codes that realize particular logic functions or procedures. Moreover, advantageous embodiments of the present disclosure comprises other implementations in which the order of execution is different from that which is depicted or discussed, including executing functions in a substantially simultaneous manner or in an opposite order according to the related functions, which should be understood by those skilled in the art.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc.

Reference throughout this specification to "an embodiment," "some embodiments," "example," "a specific example," or "some examples," means that a particular feature, structure, material, or characteristic described in connection with the embodiment or example is included in at least one embodiment or example of the present disclosure. In the specification, the terms mentioned above are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments are exemplary and cannot be construed to limit the present disclosure, and changes, alternatives, and modifications can be made in the embodiments by those skilled in the art without departing from scope of the present disclosure.

## Claims

1. A method for recommending according to a search result, comprising:
receiving a query and acquiring recommended contents according to the query;
creating a title of the recommended contents according to the query and the recommended contents, wherein the title of the recommended contents comprises information associated with the query and information associated with the recommended contents; and
displaying the recommended contents and the title of the recommended contents.

2. The method according to claim 1, wherein the information associated with the query is characteristic information of the query, the information associated with the recommended contents is common characteristic information of the recommended contents, and creating a title of the recommended contents according to the query and the recommended contents comprises:
acquiring the characteristic information of the query, wherein the characteristic information comprises a kernel term comprised in the query or a term representing a search intention of the query;
acquiring the common characteristic information of the recommended contents; and
including the characteristic information of the query and the common characteristic information of the recommended contents to the title of the recommended contents.

3. The method according to claim 2, wherein including the characteristic information of the query and the common characteristic information of the recommended contents to the title of the recommended contents comprises:
including the characteristic information of the query and the common characteristic information of the recommended contents to the title of the recommended contents in a form of a network popular word.

4. The method according to claim 2 or 3, further comprising:
creating the title of the recommended contents with predetermined contents if the characteristic information of the query or the common characteristic information of the recommended contents is unable to be included to the title.

5. The method according to any one of claims 1 to 4, wherein displaying the recommended contents and the title of the recommended contents comprises:
sequencing the recommended contents according to the title of the recommended contents; and
displaying the recommended contents sequenced corresponding to the title of the recommended contents.

6. The method according to any one of claims 1 to 5, after creating the title of the recommended contents, further comprising:
updating the title of the recommended contents.

7. A device for recommending according to a search, comprising:
an acquiring module, configured to receive a query and to acquire recommended contents according to the query;
a creating module, configured to create a title of the recommended contents according to the query and the recommended contents, wherein the title of the recommended contents comprises information associated with the query and information associated with the recommended contents; and
a displaying module, configured to display the recommended contents and the title of the recommended contents.

8. The device according to claim 7, wherein the information associated with the query is characteristic information of the query, the information associated with the recommended contents is common characteristic information of the recommended contents, and the creating module comprises:
a first unit, configured to acquire characteristic information of the query, wherein the characteristic information comprises a kernel term comprised in the query or a term representing a search intention of the query;
a second unit, configured to acquire common characteristic information of the recommended contents; and
a third unit, configured to include the characteristic information of the query and the common characteristic information of the recommended contents to the title of the recommended contents.

9. The device according to claim 8, wherein the third unit is configured to:
include the characteristic information of the query and the common characteristic information of the recommended contents to the title of the recommended contents in a form of a network popular word.

10. The device according to claim 8 or 9, wherein the creating module further comprises:
a fourth unit, configured to create the title of the recommended contents with predetermined contents if the characteristic information of the query or the common characteristic information of the recommended contents is unable to be included to the title.

11. The device according to any one of claims 7 to 10, wherein the displaying module is configured to:
sequence the recommended contents according to the title of the recommended contents; and
display the recommended contents sequenced corresponding to the title of the recommended contents.

12. The device according to any one of claims 7 to 11, further comprising:
an updating module, configured to update the title of the recommended contents.

13. An electronic device comprising:
one or more processors;
a memory; and
one or more programs, stored in the memory and configured to perform the method according to any one of claims 1 to 6 when executed by the one or more processors.

14. A non-transitory computer storage medium, having one or more modules stored therein, that when executed, configured to perform the method according to any one of claims 1 to 6.
